# EUROPÄISCHE PATENTANMELDUNG

(11) **EP 3 848 158 A1**
(43) Veröffentlichungstag der Anmeldung: **14.07.2021**
(21) Anmeldenummer: 20151098.9
(22) Anmeldetag: 10.01.2020
(51) Int. Cl.: B25F 5/00, B25F 5/02, B23Q 11/00

(54) **WERKZEUGMASCHINE MIT EINER LUFTKÜHLUNG UND VERFAHREN ZUM SCHUTZ EINES ANWENDERS EINER WERKZEUGMASCHINE VOR STAUB**

(71) Anmelder: Hilti Aktiengesellschaft, 9494 Schaan (LI)
(72) Erfinder: Sattler, Christian, 87640 Biessenhofen (DE)
(74) Vertreter: Hilti Aktiengesellschaft Corporate Intellectual Property

(57) **Zusammenfassung**

Die vorliegende Erfindung betrifft eine Werkzeugmaschine mit einer Luftkühlung für die Komponenten der Werkzeugmaschine. Dabei umfasst die Werkzeugmaschine Ausblasöffnungen zur Abgabe der verbrauchten Luft an die Umgebung der Werkzeugmaschine. In einem zweiten Aspekt betrifft die Erfindung ein Verfahren zum Schutz eines Anwenders einer Werkzeugmaschine vor Staub. Die Erfindung ist mit dem wesentlichen Vorteil verbunden, dass durch die Luftkühlung im Inneren der Werkzeugmaschine bestehende Luftströmungen ausgenutzt werden, um den bei Betrieb der Werkzeugmaschine anfallenden Staub in eine Raumrichtung "von dem Anwender weg" zu blasen. In einer besonders bevorzugten Ausgestaltung kann durch die ausgeblasene Luft ein Luftvorhang im Sinne eines Staubschildes gebildet werden, der den Anwender wirksam vor Staub schützt, indem der Luftvorhang den Staub von dem Anwender und seinen Atemwegen fernhält.

## Beschreibung

Die vorliegende Erfindung betrifft eine Werkzeugmaschine mit einer Luftkühlung für die Komponenten der Werkzeugmaschine. Dabei umfasst die Werkzeugmaschine Ausblasöffnungen zur Abgabe der verbrauchten Luft an die Umgebung der Werkzeugmaschine. In einem zweiten Aspekt betrifft die Erfindung ein Verfahren zum Schutz eines Anwenders einer Werkzeugmaschine vor Staub. Die Erfindung ist mit dem wesentlichen Vorteil verbunden, dass durch die Luftkühlung im Inneren der Werkzeugmaschine bestehende Luftströmungen ausgenutzt werden, um den bei Betrieb der Werkzeugmaschine anfallenden Staub in eine Raumrichtung "von dem Anwender weg" zu blasen. In einer besonders bevorzugten Ausgestaltung kann durch die ausgeblasene Luft ein Luftvorhang im Sinne eines Staubschildes gebildet werden, der den Anwender wirksam vor Staub schützt, indem der Luftvorhang den Staub von dem Anwender und seinen Atemwegen fernhält.

### Hintergrund der Erfindung:

Es ist bekannt, dass es bei der Bearbeitung von abrasiven Untergründen mit Werkzeugmaschinen häufig zu einer unerwünschten Staubentwicklung kommt. Dies kann beispielsweise bei der Anwendung von Trennschleifern oder Schlitzgeräten der Fall sein, mit denen beispielsweise der Untergrund "Beton" bearbeitet wird. Insbesondere wird der Staub bei den mit der Werkzeugmaschine durchgeführten Schneid- oder Schleifprozessen erzeugt. Dieser Staub kann in vielen Fällen gesundheitsgefährlich sein. Insbesondere sollte der bei der Arbeit mit der Werkzeugmaschine entstehende Staub nicht eingeatmet werden und auch nicht in die Atemwege des Bedieners gelangen. Um dies zu vermeiden, sind im Stand der Technik verschiedene Maßnahmen und Vorrichtungen bekannt, um zu verhindern, dass der Anwender der Werkzeugmaschine den Staub einatmet. Beispielsweise sind sogenannte Staubhauben bekannt, die um das Werkzeug der Werkzeugmaschine herum angeordnet sein können und dazu eingerichtet sind, den beim Betrieb der Werkzeugmaschine anfallenden Staub aufzufangen bzw. aufzunehmen. Bei dem Werkzeug der Werkzeugmaschine kann es sich beispielsweise um eine Schneid- oder Trennscheibe eines Trennschleifers oder Schlitzgeräts handeln. Konventionelle Staubhauben, wie sie aus dem Stand der Technik bekannt sind, dienen der Vermeidung der Staubausbreitung in Verbindung mit der Arbeit mit einer Werkzeugmaschine, um die Gesundheit eines Benutzers der Werkzeugmaschine vor dem Staub und seinen möglichen gesundheitlichen Beeinträchtigungen zu schützen. Allerdings hat sich gezeigt, die bekannten Maßnahmen zur Staubbindung oder Staubabsaugung häufig zusätzliche Komponenten oder Zubehör an der Werkzeugmaschine erfordern, was von vielen Nutzern nicht akzeptiert wird oder die Handhabung der Werkzeugmaschine wesentlich erschwert. Häufig weisen Staubhauben oder dergleichen ein großes Volumen auf oder ihre Verwendung führt dazu, dass die Werkzeugmaschine unhandlich wird.

Konventionelle Staubhauben werden auch häufig in Verbindung mit einem Staubsauger verwendet, um den Staub aus dem Bereich der Werkzeugmaschine abzusaugen. Allerdings können Staubsauger aus Platz- und/oder Versorgungsgründen nicht überall auf jeder Baustelle eingesetzt werden.

Aufgabe der vorliegenden Erfindung ist es, die vorstehend beschriebenen Nachteile und Mängel konventioneller Staubschutzvorrichtungen zu überwinden und eine Werkzeugmaschine bereitzustellen, bei der ein Kontakt des Anwenders mit dem bei der Arbeit mit der Werkzeugmaschine entstehenden Staub von vornherein sicher vermieden bzw. deutlich reduziert wird. Darüber hinaus soll ein Verfahren zum Schutz des Anwenders vor Staub bereitgestellt werden. Im Kontext der Erfindung wäre es wünschenswert, wenn die bereitzustellende technische Lehre nicht dazu führt, dass zusätzliche Komponenten an der Werkzeugmaschine befestigt werden müssen, die die Werkzeugmaschine klobiger und unhandlicher machen und dadurch die Arbeit mit der Werkzeugmaschine erschweren. Es wäre insbesondere wünschenswert, wenn die Konstruktion bekannter Werkzeugmaschinen möglichst wenig abgeändert werden müsste, um dennoch einen wirksamen Staubschutz für den Anwender der Werkzeugmaschine zur Verfügung stellen zu können.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Werkzeugmaschine mit einer Luftkühlung für die Komponenten der Werkzeugmaschine vorgesehen, wobei die Werkzeugmaschine Ausblasöffnungen zur Abgabe der verbrauchten Luft an die Umgebung der Werkzeugmaschine umfasst. Die Werkzeugmaschine ist dadurch gekennzeichnet, dass die Ausblasöffnungen so ausgestaltet sind, dass ein während des Betriebs der Werkzeugmaschine entstehender Staub von einem Anwender der Werkzeugmaschine fortgeblasen wird. Ein besonderer Vorteil der Erfindung besteht darin, dass mit der vorgeschlagenen Werkzeugmaschine bestehende Luftströmungen innerhalb der Werkzeugmaschine ausgenutzt werden können, um den Staub vom Anwender wegzublasen. Die Luftströmungen innerhalb der Werkzeugmaschine gehen vorzugsweise auf die Luftkühlung zurück, die verwendet wird, um die Komponenten und Bestandteile der Werkzeugmaschine zu kühlen und vor einer unerwünschten Überhitzung zu schützen. Mit anderen Worten werden im Kontext der vorliegenden Erfindung vorhandene Luftströmungen, die wegen der Luftkühlung der Komponenten durch die Werkzeugmaschine geführt werden, verwendet, um einen zusätzlichen technischen Effekt zu bewirken, nämlich das Fortblasen des Staubs, der beim Betrieb der Werkzeugmaschine entsteht.

Der Begriff "verbrauchte Luft" steht im Sinne der Erfindung bevorzugt für die Luft, die von der Luftkühlung durch die Werkzeugmaschine geführt wurde und nach Durchgang durch das Gerät an den Ausblasöffnungen aus der Werkzeugmaschine ausgeblasen wird. Die verbrauchte Luft wird dadurch an die Umgebung der Werkzeugmaschine abgegeben. Sie ist durch die Verwendung als Kühlluft im Vergleich zu der übrigen Umgebungsluft erwärmt. An anderen Stellen kann die Werkzeugmaschine Einsaugöffnungen aufweisen, an denen frische, unverbrauchte Luft aus der Umgebung eingesaugt wird, um als Kühlluft durch die Werkzeugmaschine geführt zu werden. Es kann vorgesehen sein, dass im Kontext der vorliegenden Erfindung eine zusätzliche Luftströmung erzeugt wird, wobei hierfür vorzugsweise die zur Kühlung vorhandene bzw. benötigte Luftströmung verwendet werden kann.

Die Erfindung kann insbesondere bei der Verwendung der Werkzeugmaschine im Freien eingesetzt werden. In solchen Anwendungsfällen ist es häufig ausreichend, dass der Anwender dadurch vor Staub geschützt wird, dass der Staub von vornherein von ihm weggeblasen wird und der Anwender und seine Atemwege dadurch nicht oder im Wesentlichen nicht mit dem Staub in Berührung kommen. Tests haben gezeigt, dass eine Strömungsgeschwindigkeit und/oder ein Volumenstrom des Luftvorhanges eine optimale Schutzwirkung für den Anwender ermöglichen können. Insbesondere können die Strömungsgeschwindigkeit und/oder der Volumenstrom der Luftströmung durch die Anordnung oder Positionierung der Ausblasöffnungen eingestellt werden. Darüber hinaus können die Strömungsgeschwindigkeit und/oder der Volumenstrom innerhalb der Luftströmung durch die Ausgestaltung der Ausblasöffnungen, zum Beispiel hinsichtlich ihrer Form, beeinflusst werden.

Es ist im Sinne der Erfindung bevorzugt, dass die Größe bzw. Stärke der erzeugten Luftströmung in Abhängigkeit von dem Kühlluftstrom des Motors, des Volumenstroms einer Staubsaugvorrichtung und/oder der Umfangsgeschwindigkeit der Trennscheibe der Werkzeugmaschine bestimmt wird. Vorzugsweise wird die Strömungsgeschwindigkeit im Kontext der vorliegenden Erfindung so ausgewählt, dass die Strömungsgeschwindigkeit größer ist als die Geschwindigkeit der Staubpartikel an einem Punkt X. Dies bedeutet beispielsweise im Falle eines Trennschleifers, dass eine Strömungsgeschwindigkeit in einem Bereich von 5 bis 200 m/s liegt, vorzugsweise in einem Bereich von 5 bis 50 m/s, besonders bevorzugt in einem Bereich von 5 bis 20 m/s und am meisten bevorzugt bei größer als 10 m/s. Es ist im Sinne der Erfindung insbesondere bevorzugt, dass die Strömungsgeschwindigkeit in Abhängigkeit von einem Abstand des Punkts X zu einem Scheibenumfang und/oder einer Oberfläche des bearbeiteten Materials ausgewählt werden kann. Der Volumenstrom der Luftströmung liegt vorzugsweise in einem Bereich von größer als 20 I/s. Besonders bevorzugt liegt der Volumenstrom des Kühlluftstroms in einem Bereich von größer als 30 I/s. Diese Werte haben sich in Tests als besonders gut geeignet erwiesen, um einen wirksamen Luftvorhang auszubilden und den Nutzer der Werkzeugmaschine effektiv vor Staub zu schützen.

Auch die Richtung, in die die Luft aus den Ausblassöffnungen herausgeblasen wird, kann im Kontext der vorliegenden Erfindung so eingestellt werden, dass der Staub im Wesentlichen vollständig von dem Anwender weggeblasen wird. Dadurch kann vorteilhafterweise erreicht werden, dass eine Staubentwicklung und/oder eine Strömung des Staubs in Richtung des Kopfes des Anwenders allenfalls sehr gering ausfällt oder vollständig unterbleibt. Tests haben gezeigt, dass die Erfindung überraschend wenig anfällig auf Wind reagiert. Es ist im Sinne der Erfindung besonders bevorzugt, dass der Anwender seine Arbeit mit der Werkzeugmaschine an eine aktuelle Windrichtung anpasst, wodurch die Fortblaswirkung der Erfindung weiter verstärkt werden kann. Es ist im Sinne der Erfindung bevorzugt, dass die Ausblasöffnungen in Bezug auf ihre Position, Gestaltung und/oder Richtung variiert werden können, um den während des Betriebs der Werkzeugmaschine entstehenden Staub vom Anwender der Werkzeugmaschine fortzublasen. Mit anderen Worten ist es im Sinne der Erfindung bevorzugt, dass durch eine Position, Gestaltung und/oder Richtung der Ausblasöffnungen der luftgekühlten Werkzeugmaschine der bei der Anwendung entstandene Staub vom Anwender weggeblasen wird.

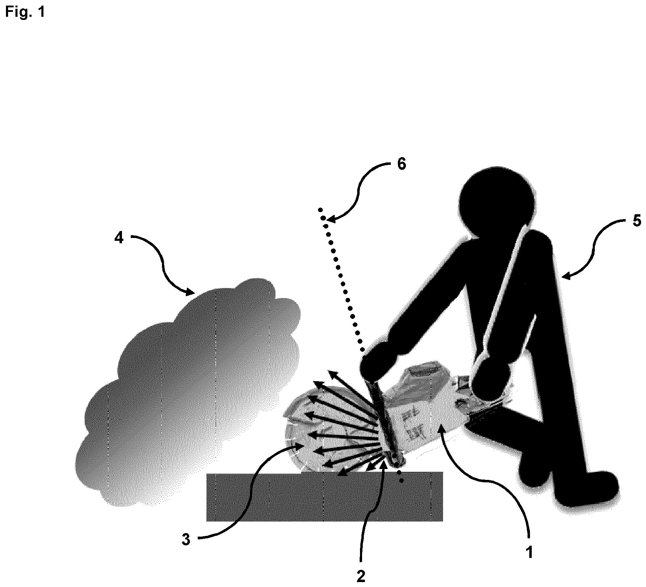

Es kann im Sinne der Erfindung insbesondere bevorzugt sein, dass die durch die Ausblasöffnungen abgegebene verbrauchte Luft einen Luftvorhang zum Schutz des Anwenders vor Staub bildet. Eine bevorzugte Ausgestaltung eines solchen Luftvorhangs ist in Fig. 1 dargestellt (siehe gestrichelte Linie). Es ist im Sinne der Erfindung bevorzugt, dass mit dem Strom der verbrauchten Luft, die durch die Ausblasöffnungen der Werkzeugmaschine abgegeben wird, ein Luftvorhang gebildet werden kann, der vorzugsweise einen hinteren Bereich der Werkzeugmaschine und den Anwender, der sich bei der Bedienung der Werkzeugmaschine in diesem hinteren Bereich der Werkzeugmaschine aufhält, von dem Staub, der bei Betrieb der Werkzeugmaschine entsteht, abschirmt. In Fig. 1 ist zu sehen, wie sich eine Staubwolke im vorderen Bereich der Werkzeugmaschine bildet, die vorteilhafterweise durch die Abschirmung durch den Luftvorhang nicht oder im Wesentlichen nicht in den Bereich des Kopfes des Anwenders im hinteren Bereich der Werkzeugmaschine gelangen kann. Dadurch kann der Anwender wirksam vor dem Staub und dem unerwünschten Einatmen desselben geschützt werden. Der Anwender kann sich vorteilhafterweise frei in dem hinteren Bereich der Werkzeugmaschine bewegen, da vorzugweise der gesamte hintere Bereich der Werkzeugmaschine von dem Luftvorhang abgeschirmt und vor Staubeinwirkung geschützt ist. Tests haben gezeigt, dass sich der erzeugte Luftvorhang überraschend stabil gegenüber der Einwirkung äußerer Störungen verhält. Beispielsweise bleibt die Wirkung des Luftvorhangs auch bei leicht wehenden Winden bestehen. Es kann im Sinne der Erfindung auch bevorzugt sein, dass die Ausblasöffnungen in Bezug auf ihre Position, Gestaltung und/oder Richtung variiert werden können, um aus der verbrauchten Luft der Luftkühlung einen Luftvorhang zum Schutz des Anwenders vor Staub zu bilden. Dadurch kann beispielsweise die Form oder die Ebene, in der sich der Luftvorhang ausbildet, beeinflusst oder eingestellt werden.

Der Luftvorhang wird vorzugsweise von einem Luftstrom gebildet, der von der Luftkühlung in Verbindung mit den Ausblasöffnungen der Werkzeugmaschine erzeugt wird. Die Luftkühlung umfasst vorzugsweise eine Pumpe, die die Luftströmung im Inneren der Werkzeugmaschine erzeugt, wobei mit der Luftströmung die Komponenten der Werkzeugmaschine gekühlt werden. Der Begriff «Luft» bezeichnet im Sinne der Erfindung ein Gasgemisch, das insbesondere Stickstoff N2 und Sauerstoff O2, sowie verschiedene weitere Gase und Gasgemische umfasst. Vorzugsweise wird die Luft von der Pumpe der Luftkühlung der Werkzeugmaschine aus der Umgebung der Werkzeugmaschine eingesaugt und durch das Gerät geführt. Die verbrauchte Luft wird durch die Ausblasöffnungen wieder an die Umgebung abgegeben. Vorzugsweise können die Ausblasöffnungen lochartig oder düsenartig ausgebildet sein. Es stellt einen besonderen Vorteil der Erfindung dar, dass die Luftströmung durch die Ausblasöffnungen und ihre Ausgestaltung so geformt werden kann, dass der Staub, der bei der Arbeit mit der Werkzeugmaschine entsteht, besonders wirksam von dem Anwender weggeblasen werden kann bzw. dass ein besonders kräftiger und robuster Luftvorhang zum Schutz des Anwenders vor Staub gebildet werden kann.

Insbesondere düsenartig ausgebildete Ausblasöffnungen erlauben eine Erhöhung der Strömungsgeschwindigkeit im Luftstrom oder bei Bedarf auch ein Umlenken bzw. eine Änderung der Strömungsrichtung des Luftstroms. Es ist im Sinne der Erfindung bevorzugt, dass die Ausblasöffnungen düsenartig ausgebildet sein können, wobei der Luftvorhang oder der Luftstrom vorteilhafterweise von der Düse in geeigneter Weise geformt werden kann, um einen besonders wirksamen Staubschutz für den Anwender zu gewährleisten. Wenn die Ausblasöffnungen düsenartig ausgebildet sind, können die Düsen beispielsweise auch beweglich ausgebildet sein. Der Anwender kann den Luftvorhang bzw. die Ausblasrichtung dann nach seinen Bedürfnissen bzw. in Abstimmung auf den konkreten Anwendungsfall und seine räumlichen Gegebenheiten anpassen.

In einer besonders bevorzugten Ausführungsform der Erfindung kann die Werkzeugmaschine über Stellmittel verfügen, mit denen die Strömungsgeschwindigkeit und/oder der Volumenstrom des Luftstroms, mit dem der Staub vom Anwender weggeblasen wird oder mit dem der Luftvorhang erzeugt wird, eingestellt werden kann.

In einem zweiten Aspekt betrifft die Erfindung ein Verfahren zum Schutz eines Anwenders einer Werkzeugmaschine vor Staub. Das Verfahren ist durch die folgenden Schritte gekennzeichnet
a) Bereitstellung einer Werkzeugmaschine, wobei die Werkzeugmaschine eine Luftkühlung umfasst,
b) Betrieb der Werkzeugmaschine, wobei durch den Betrieb Staub erzeugt wird,
c) Betrieb der Luftkühlung der Werkzeugmaschine, wodurch eine Luftströmung innerhalb der Werkzeugmaschine erzeugt wird,
d) Ausblasen der durch die Luftkühlung verbrauchten Luft durch Ausblasöffnungen, so dass der während des Betriebs der Werkzeugmaschine entstehende Staub von einem Anwender der Werkzeugmaschine fortgeblasen wird.

Die für die vorgeschlagene Werkzeugmaschine eingeführten Begriffe, Definitionen und technischen Vorteile gelten vorzugsweise für das vorgeschlagene Schutzverfahren analog. Es ist im Sinne der Erfindung bevorzugt, dass eine Werkzeugmaschine bereitgestellt wird, die eine Luftkühlungsvorrichtung ("Luftkühlung") aufweist. Die Luftkühlung kann eine Pumpe aufweisen, mit der Luft aus der Umgebung der Werkzeugmaschine eingesaugt wird, wobei diese Luft als Kühlluft durch die Werkzeugmaschine geführt wird, um die Bestandteile der Werkzeugmaschine, die vor einer Überhitzung geschützt werden sollen, zu kühlen. Die verbrauchte, d.h. insbesondere erwärmte Luft wird vorzugsweise durch Ausblasöffnungen wieder an die Umgebung abgegeben.

Bei der vorliegenden Erfindung wird der bei der Arbeit mit der Werkzeugmaschine erzeugte Staub durch die aus den Ausblasöffnungen strömende Luft vorzugsweise in einen Raumbereich geblasen, in dem sich der Anwender der Werkzeugmaschine nicht aufhält. Dieser Bereich kann im Sinne der Erfindung als "vorderer Bereich der Werkzeugmaschine" bezeichnet werden. In einer bevorzugten Ausführungsform der Erfindung kann sich zwischen der Staubwolke, die bei der Nutzung der Werkzeugmaschine entsteht, und dem Anwender der Werkzeugmaschine ein Luftvorhang ausbilden, der wie ein Schutzschild des Anwenders gegen den Staub wirkt. In dieser Ausführung der Erfindung ist es bevorzugt, dass die durch die Ausblasöffnungen abgegebene verbrauchte Luft einen Luftvorhang zum Schutz des Anwenders vor Staub bildet.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: schematische Darstellung einer bevorzugten Ausgestaltung der Erfindung
- Fig. 2: schematische Darstellung einer weiteren bevorzugten Ausgestaltung der Erfindung

### Ausführungsbeispiele:

Figur 1 zeigt eine schematische Darstellung einer bevorzugten Ausgestaltung der vorgeschlagenen Werkzeugmaschine (1), die von einem Anwender (5) benutzt wird. In Fig. 1 ist insbesondere dargestellt, wie der Anwender (5) einen Untergrund mit einem Trennschleifer bearbeitet. Zu sehen ist dabei das Werkzeug der Werkzeugmaschine (1), in dem in Fig. 1 dargestellten Ausführungsbeispiel der Erfindung eine Trennscheibe. Die Werkzeugmaschine (1) wird von einem ersten Handgriff in einen vorderen Bereich und einen hinteren Bereich unterteilt. Im hinteren Bereich der Werkzeugmaschine (1) kann ein zweiter Handgriff angeordnet sein, der vorzugsweise als hinterer Handgriff der Werkzeugmaschine (1) bezeichnet wird. Der Anwender (5) steht bei der Arbeit mit der Werkzeugmaschine (1) zumeist hinter der Werkzeugmaschine (1), d.h. in dem Raumbereich, der dem hinteren Bereich der Werkzeugmaschine (1) zugeordnet werden kann. Dieser Bereich kann verkürzt als «hinterer Bereich der Werkzeugmaschine (1)» bezeichnet werden.

Bei der Arbeit mit der Werkzeugmaschine (1) entsteht Staub (4). Dies insbesondere dann, wenn abrasive Untergründe, wie zum Beispiel Beton, mit der Werkzeugmaschine (1) bearbeitet werden. Der Staub (4) ist in Fig. 1 schematisch als Staubwolke dargestellt; er kann jedoch beliebig in Raum verteilt sein. Die Werkzeugmaschine (1) weist eine Luftkühlung auf (nicht dargestellt, im Inneren der Werkzeugmaschine angeordnet), wobei die Werkzeugmaschine (1) die von der Luftkühlung verbrauchte Luft (3) über Ausblasöffnungen (2) an die Umgebung abgibt. Der Begriff «verbraucht» bedeutet im Sinne der Erfindung bevorzugt, dass die Luft (3) durch die Werkzeugmaschine (1) hindurchgeführt wurde, um die Komponenten der Werkzeugmaschine (1) vor einer möglichen Überhitzung zu schützen. Die Ausblasöffnungen (2) können verschiedene Ausgestaltungen aufweisen. Beispielsweise können sie düsenartig oder beweglich ausgebildet sein. Sie sind insbesondere dazu eingerichtet, die verbrauchte Luft (3) so an die Umgebung abzugeben, dass der Staub (4), der bei der Arbeit mit der Werkzeugmaschine (1) entsteht, vom Anwender (5) der Werkzeugmaschine (1) weggeblasen wird. Da der Anwender (5) üblicherweise hinter der Werkzeugmaschine (1) steht, wenn er mit ihr arbeitet, wird die verbrauchte Luft (3) vorzugsweise in eine Raumrichtung «nach vorne» von der Werkzeugmaschine (1) weggeblasen. Die verbrauchte Luft (3) bildet vorzugsweise eine Luftströmung, die von der Werkzeugmaschine (1) weg in die Umgebung der Werkzeugmaschine (1) strömt. Die Strömungsrichtung der verbrauchten Luft (3) wird in Fig. 1 durch die Pfeile mit dem Bezugszeichen 3 dargestellt. Die von der verbrauchten Luft (3) gebildete Luftströmung reisst vorzugsweise den Staub (4), der bei der Arbeit mit der Werkzeugmaschine (1) entsteht, mit, so dass er von dem Nutzer (5) der Werkzeugmaschine (1) wegtransportiert wird. Der Aufenthaltsort des so weggeblasenen Staubs (4) wird in Fig. 1 durch die Staubwolke (4) angedeutet. Die Vielzahl der Pfeile 3 deutet an, dass die Werkzeugmaschine (1) mehrere Ausblasöffnungen (2) aufweist. Diese können vorzugsweise im Bereich des ersten Handgriffs der Werkzeugmaschine (1) angeordnet vorliegen und so ausgerichtet sein, dass die verbrauchte Luft (3), wie in Fig. 1 angedeutet, von der Werkzeugmaschine (1) und dem Anwender (5) weggeblasen wird. Insbesondere wird durch die Pfeile 3 eine Raumrichtung «nach vorne» festgelegt, während der Anwender (5) in Bezug auf die Werkzeugmaschine (1) eine Raumrichtung «hinten» oder «nach hinten» festlegt.

Die Werkzeugmaschine (1) bzw. die Ausblasöffnungen (2) können vorzugsweise auch dazu eingerichtet sein, die verbrauchte Luft (3) so aus der Werkzeugmaschine (1) abzugeben, dass ein Luftvorhang (6) aus der verbrauchten Luft gebildet wird. Dieser Luftvorhang (6) kann flächig ausgebildet sein und beispielsweise eine Ebene bilden. Die Ebene, die von dem Luftvorhang (6) aufgespannt wird, kann beispielsweise so ausgebildet sein, dass der erste Handgriff der Werkzeugmaschine (1) in dieser Ebene liegt. Vorzugsweise markiert der Luftvorhang (6) eine Grenze zwischen einem vorderen Bereich der Umgebung der Werkzeugmaschine (1), in dem sich der Staub (4) ausbreiten kann, und einem hinteren Bereich der Umgebung der Werkzeugmaschine (1). Es ist im Sinne der Erfindung bevorzugt, dass sich der Anwender (5) der Werkzeugmaschine (1) in dem hinteren Bereich der Umgebung der Werkzeugmaschine (1) aufhält, da der Staub (4) der Werkzeugmaschine (1) bewusst nicht in diesen Bereich geblasen wird. Darüber hinaus ist der hintere Bereich der Umgebung der Werkzeugmaschine (1) durch den Luftvorhang (6) vor dem Eindringen von Staub (4) geschützt. Es ist im Sinne der Erfindung insbesondere bevorzugt, dass die verbrauchte Luft (3) in einen Bereich eines Werkzeugs der Werkzeugmaschine (1) geblasen wird. Bei dem Werkzeug der Werkzeugmaschine (1) kann es sich beispielsweise um die Trenn- oder Schneidscheibe eines Trennschleifers handeln. Dies ist mit dem Vorteil verbunden, dass sich der Anwender (5) der Werkzeugmaschine (1) insbesondere während des Betriebs der Werkzeugmaschine (1) zumeist nicht im Bereich des Werkzeugs der Werkzeugmaschine (1) aufhält, da diese einen Gefahrenbereich darstellen kann. Indem der Staub (4) in einen Raumbereich geblasen wird, indem sich der Anwender (5) während der Arbeit mit der Werkzeugmaschine (1) praktisch nicht aufhalten wird, kann der Anwender (5) besonders wirksam vor dem Staub (4) und den mit Staub (4) assoziierten Gesundheitsbeeinträchtigungen geschützt werden. Vorzugsweise wird die Luftströmung, die von der verbrauchten Luft (3) gebildet wird, durch die Ausgestaltung und Anzahl, Anordnung und Ausrichtung der Ausblasöffnungen (2) geformt und in die gewünschte Richtung geblasen. Dazu kann die Werkzeugmaschine (1) über geeignete Stellmittel (nicht dargestellt) verfügen.

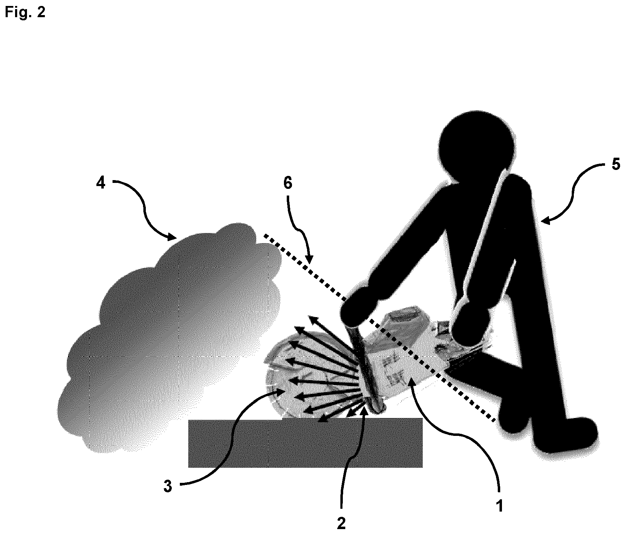

Figur 2 zeigt eine schematische Darstellung einer weiteren bevorzugten Ausgestaltung der vorgeschlagenen Werkzeugmaschine (1). Bei dem in Fig. 2 dargestellten Ausführungsbeispiel der Werkzeugmaschine (1) sind die Ausblasöffnungen (2) so ausgebildet, dass der Luftvorhang (6), der von der verbrauchten Luft (3) der Werkzeugmaschine (1) gebildet wird, in einem anderen Winkel in Bezug auf eine zu bearbeitende Oberfläche erzeugt wird. Der Luftvorhang (6) kann beispielsweise im Wesentlichen senkrecht auf der zu bearbeitenden Oberfläche stehen. In diesem Fall beträgt der Winkel, der zwischen Luftvorhang (6) und Oberfläche eingeschlossen wird, circa 90 Grad. Der Luftvorhang kann aber auch - wie in Fig. 2 dargestellt - weiter nach vorne geneigt sein. Der Begriff «weiter nach vorne» bedeutet in diesem Zusammenhang, dass sich der Luftvorhang (6) von dem Nutzer (5) der Werkzeugmaschine (1) weg neigt. Der eingeschlossene Winkel zwischen Luftvorhang (6) und Oberfläche beträgt dann vorzugsweise weniger als 90 Grad. Beispielsweise kann ein solcher Neigungswinkel in einem Bereich von 20 bis 90 Grad liegen, bevorzugt bei 30 bis 60 Grad und besonders bevorzugt zwischen 35 und 45 Grad oder zwischen 70 und 80 Grad. Vorzugsweise kann der Luftvorhang (6) jeden Neigungswinkel zwischen 20 und 90 Grad annehmen.

### Bezugszeichenliste

- 1: Werkzeugmaschine
- 2: Ausblasöffnungen
- 3: verbrauchte Luft
- 4: Staub
- 5: Anwender
- 6: Luftvorhang

## Patentansprüche

1. Werkzeugmaschine (1) mit einer Luftkühlung für die Komponenten der Werkzeugmaschine, wobei die Werkzeugmaschine (1) Ausblasöffnungen (2) zur Abgabe der verbrauchten Luft (3) an die Umgebung der Werkzeugmaschine umfasst
**dadurch gekennzeichnet, dass**
die Ausblasöffnungen (2) so ausgestaltet sind, dass ein während des Betriebs der Werkzeugmaschine (1) entstehender Staub (4) von einem Anwender (5) der Werkzeugmaschine (1) fortgeblasen wird.

2. Werkzeugmaschine (1) nach Anspruch 1,
**dadurch gekennzeichnet, dass**
die durch die Ausblasöffnungen (2) abgegebene verbrauchte Luft (3) einen Luftvorhang (6) zum Schutz des Anwenders (5) vor Staub (4) bildet.

3. Werkzeugmaschine (1) nach Anspruch 1 oder 2,
**dadurch gekennzeichnet, dass**
die Ausblasöffnungen (2) in Bezug auf ihre Position, Gestaltung und/oder Richtung variierbar sind, um den während des Betriebs der Werkzeugmaschine (1) entstehenden Staub (4) vom Anwender (5) der Werkzeugmaschine (1) fortzublasen.

4. Werkzeugmaschine (1) nach Anspruch 1 oder 2,
**dadurch gekennzeichnet, dass**
die Ausblasöffnungen (2) in Bezug auf ihre Position, Gestaltung und/oder Richtung variierbar sind, um aus der verbrauchten Luft (3) der Luftkühlung einen Luftvorhang (6) zum Schutz des Anwenders (5) vor Staub (4) zu bilden.

5. Werkzeugmaschine (1) nach einer der vorhergehenden Ansprüche,
**dadurch gekennzeichnet, dass**
die Ausblasöffnungen (2) in einem Bereich eines ersten Handgriffs der Werkzeugmaschine (1) angeordnet vorliegen.

6. Werkzeugmaschine (1) nach einer der vorhergehenden Ansprüche,
**dadurch gekennzeichnet, dass**
die verbrauchte Luft (3) in einen Bereich eines Werkzeugs der Werkzeugmaschine (1) geblasen wird.

7. Werkzeugmaschine (1) nach einer der vorhergehenden Ansprüche,
**dadurch gekennzeichnet, dass**
die Ausblasöffnungen (2) Düsen umfassen oder düsenartig ausgebildet sind.

8. Werkzeugmaschine (1) nach Anspruch 7,
**dadurch gekennzeichnet, dass**
die Düsen beweglich ausgebildet sind.

9. Werkzeugmaschine (1) nach einer der vorhergehenden Ansprüche,
**dadurch gekennzeichnet, dass**
die Werkzeugmaschine (1) Stellmittel umfasst, um eine Strömungsgeschwindigkeit und/oder einen Volumenstrom innerhalb der durch die Ausblasöffnungen (2) abgegebenen verbrauchten Luft (3) einzustellen.

10. Verfahren zum Schutz eines Anwenders (5) einer Werkzeugmaschine (1) vor Staub (4)
**gekennzeichnet durch die folgenden Schritte**
a) Bereitstellung einer Werkzeugmaschine (1) nach einem der vorhergehenden Ansprüchen,
b) Betrieb der Werkzeugmaschine (1), wobei durch den Betrieb Staub (4) erzeugt wird,
c) Betrieb der Luftkühlung der Werkzeugmaschine (1), wodurch eine Luftströmung innerhalb der Werkzeugmaschine (1) erzeugt wird,
d) Ausblasen der durch die Luftkühlung verbrauchten Luft (3) durch Ausblasöffnungen (2), so dass der während des Betriebs der Werkzeugmaschine (1) entstehende Staub (4) von einem Anwender (5) der Werkzeugmaschine (1) fortgeblasen wird.

11. Verfahren nach Anspruch 10
**dadurch gekennzeichnet, dass**
die durch die Ausblasöffnungen (2) abgegebene verbrauchte Luft (3) einen Luftvorhang (6) zum Schutz des Anwenders (5) vor Staub (4) bildet.
